# EUROPEAN PATENT SPECIFICATION

(11) **EP 3 582 248 B1**
(45) Date of publication and mention of the grant of the patent: **06.01.2021**
(21) Application number: 18177774.9
(22) Date of filing: 14.06.2018
(51) Int. Cl.: H01J 49/00

(54) **ACCELERATOR MASS SPECTROMETRY SYSTEM AND ASSOCIATED METHOD**
BESCHLEUNIGERMASSENSPEKTROMETRIESYSTEM UND ZUGEHÖRIGES VERFAHREN
SYSTÈME DE SPECTROMÉTRIE DE MASSE D'ACCÉLÉRATEUR ET PROCÉDÉ ASSOCIÉ

(43) Date of publication of application: 18.12.2019
(73) Proprietor: High Voltage Engineering Europa B.V., 3812 RR Amersfoort (NL)
(72) Inventor: Mous, Dirk Jozef Willem, 3433 EB Nieuwegein (NL)
(74) Representative: Hooiveld, Arjen Jan Winfried

(56) References cited:
- US-A- 5 569 915
- STEINHOF A ET AL: "A 82KR PILOT BEAM FOR THE ACCELERATOR MASS SPECTROMETRY OF 41CA", NUCLEAR INSTRUMENTS & METHODS IN PHYSICS RESEARCH. SECTION B: BEAM INTERACTIONS WITH MATERIALS AND ATOMS, ELSEVIER BV, NL, vol. B52, no. 3 / 04, 2 December 1990 (1990-12-02), pages 391-397, XP000178398, ISSN: 0168-583X, DOI: 10.1016/0168-583X(90)90444-Y

## Description

The present invention relates to an accelerator mass spectrometry system for measuring an isotopic ratio of a chemical element in a sample. Furthermore, the present invention relates to a method for measuring an isotopic ratio of a chemical element in a sample.

Since the early development of accelerator mass spectrometry in 1977, accelerator mass spectrometers developed into a mature analytic tool for the measurement of extremely low concentrations of long-lived radio-isotopes. Best examples of radio-isotopes that found their application in research fields like archeology, geoscience, environmental science and biomedicine, include ³H, ¹⁰Be, ¹⁴C, ²⁶Al, ³⁶Cl, ⁴¹Ca, ⁵⁹Ni, ¹²⁹I and ²³⁹Pu.

Historically, the vast majority of accelerators used in accelerator mass spectrometry are tandem accelerators. Although other types of accelerators are sometimes applied, including single-ended accelerators, cyclotrons and linear accelerators, tandem accelerators are the first choice because of their widespread availability, versatility and the high precision that can be achieved with these accelerators.

Known accelerator mass spectrometry systems that use a tandem accelerator comprise an ion source, in which atoms from solid or gaseous sample material are negatively ionized. The negative ions are extracted from the ion source in an electrostatic field region and form a stream of ions, referred to as "ion beam". The extracted negative ion beam contains the various isotopes of the element of interest. Usually, one of these isotopes is a long-lived radioisotope having an extremely low natural abundance, typically 10¹⁰ to 10¹⁶ times lower than the stable isotopes. For some elements, including carbon, several stable isotopes are present. Such stable isotope(s) are usually measured in a Faraday cup(s) with intensities of nano-amperes or micro-amperes. However, the concentration of radioisotopes is usually so low that individual ions of these isotopes are commonly counted one after another using a suitable particle detector.

Current systems available on the market include dedicated systems tailored for only one radioisotope (mostly ¹⁴C) as well as versatile systems that are capable of analyzing a variety of different radioisotopes with the same instrument. Despite the fact that these systems are carefully designed (they often comprise multiple filter stages, each separating specific interferences from the radioisotope of interest), it is very well possible that unintentionally other particles than the radioisotope of interest make it into the particle detector where they mimic the radioisotopes and increase the background level of the instrument. Since the concentration ratio between a radioisotope and a stable isotope can be as low as 10⁻¹⁶, it is required that current systems perform very well in term of analysis precision and background level reduction.
Reducing the background level of the instrument can be realized by adding one or more filter stages to the system. However, by doing so, costs, complexity and footprint of the accelerator mass spectrometry system are significantly increased.

It is therefore an object of the invention to provide an accelerator mass spectrometry system that effectively reduces background level in an efficient and cost-effective manner.

Document US 5 569 915 A discloses the features of the preamble of independent claims 1 and 10.

According to a first aspect, the invention provides hereto an accelerator mass spectrometry system according to the preamble of claim 1, characterized by an additional analyzer located in between the charge stripping section and the second accelerating section, which is configured to receive positive ions that have exited the charge stripping section and to separate positive ions having a charge state corresponding to a predetermined charge-state value from positive ions having a charge state not corresponding to the predetermined charge-state value, so as to transmit ions with different charge states in mutually different directions such that only ions having a charge state corresponding to the predetermined charge-state value are transmitted towards the particle detector. In this way, the additional analyzer serves as a charge-state selector, in which interfering ions, i.e. background-level increasing ions, that have a different charge-state than that of the first and second isotopes, i.e. the isotopes of interest, have a different bending radius and are consequently swept out of the path of the isotopes of interest. Because the relative difference between the two charge states, e.g. 1+ versus 2+, or 2+ versus 3+, *et cetera,* is large, the bending angle of additional analyzer may be relatively small in comparison to other analyzers in the accelerator mass spectrometry system, while still providing the required background reduction. The reason for this is that the other analyzers of the accelerator mass spectrometry system need to resolve one isotope from the other, which is a relative small difference and therefore requires a larger bending angle compared to mere charge-state selection. The location of the additional analyzer between the charge stripping section and the second acceleration section is optimal, since this is the only location where the interfering ions that need to be suppressed can be relatively easily discriminated from the first and second isotopes, i.e. the isotopes of interest. As a result, the additional analyzer, being a small analyzer having a small bending angle located in between the charge stripping section and the second accelerating section, is capable of effectively reducing the background level of the accelerator mass spectrometry system, while keeping an increase in costs, complexity and footprint of the system small.

In a preferred embodiment, the accelerator mass spectrometry system further comprises a Faraday cup configured to measure a quantity of ions of only one of the first and second isotopes, said one of the first and second isotopes being different from the one of the first and second isotopes that enter the particle detector. In this way, an isotopic ratio between a radioisotope and a stable isotope of a chemical element of interest in a sample can be determined by measuring ions of the stable isotope in the Faraday cup with intensities of nano-amperes or micro-amperes, while measuring individual ions of the radioisotope with the particle detector. The isotopic ratio can subsequently be determined from the measurement data of the Faraday cup and the measurement data of the particle detector. Preferably, the Faraday cup is arranged after the second mass analyzer.

In a preferred embodiment, the additional analyzer comprises a magnetic analyzer or an electrostatic analyzer. Essentially, both magnetic and electrostatic versions of the additional analyzer will be equally suitable as long as they provide different bending radii for the different charge-states. Preferably, the magnetic analyzer comprises a dipole magnet and the electrostatic analyzer comprises an electrostatic deflector.

In a preferred embodiment, the dipole magnet and the electrostatic deflector have a bending angle of 30 degrees or less. In the case that the additional analyzer is in the form of a dipole magnet, the additional analyzer will have slight different bending radii for the different isotopes of interest, which asks for a careful design of the second mass analyzer and the subsequent Faraday cups. Since the required bending angle of the additional analyzer can be relatively small and at the same time eliminates the dominant contribution to the background, it provides an efficient and cost-effective manner to surpass limitations on background interference of existing instrumentation. Preferably, the bending angle is between 5 and 20 degrees. More preferably, the bending angle is approximately 12 degrees.

In a preferred embodiment, the accelerator mass spectrometry system is configured for a measurement of a quantity of radiocarbon in the sample, wherein the additional analyzer is configured to select charge state 1+. In this specific configuration adapted to the measurement of radiocarbon (i.e. ¹⁴C) using charge state 1+, the bending angle can be smaller than 30 degrees, or even as small as approximately 12 degrees, so that the accelerator mass spectrometry system is eminently suitable for such measurement. Such bending angles are sufficiently large to effectively remove the otherwise interfering ions. The accelerator mass spectrometry system therewith provides an efficient and cost-effective tool to surpass limitations on background interference of existing instrumentation.

According to a second aspect, the invention provides a method according to the preamble of claim 10, characterized by subjecting the positive ions that have exited the charge stripping section to an additional analyzer, located in between the charge stripping section and the second accelerating section, to separate positive ions having a charge state corresponding to a predetermined charge-state value from positive ions having a charge state not corresponding to the predetermined charge-state value, so as to transmit ions with different charge states in mutually different directions such that only ions having a charge state corresponding to the predetermined charge-state value are transmitted towards the particle detector. In this way, the additional analyzer serves as a charge-state selector, in which interfering ions, i.e. background-level increasing ions, that have a different charge-state than that of the first and second isotopes, i.e. the isotopes of interest, have a different bending radius and are consequently swept out of the path of the isotopes of interest. Because the relative difference between the two charge states, e.g. 1+ versus 2+, or 2+ versus 3+, *et cetera,* is large, the bending angle of additional analyzer may be relatively small in comparison to other analyzers in the accelerator mass spectrometry system, while still providing the required background reduction. The reason for this is that the other analyzers of the accelerator mass spectrometry system need to resolve one isotope from the other, which is a relative small difference and therefore requires a larger bending angle compared to mere charge-state selection. The location of the additional analyzer between the charge stripping section and the second acceleration section is optimal, since this is the only location where the interfering ions that need to be suppressed can be relatively easily discriminated from the first and second isotopes, i.e. the isotopes of interest. As a result, the additional analyzer, being a small analyzer having a small bending angle located in between the charge stripping section and the second accelerating section, is capable of effectively reducing the background level of the accelerator mass spectrometry system, while keeping an increase in costs, complexity and footprint of the system small.

In a preferred embodiment, the method further comprises a step of measuring a second quantity of ions of only one of the first and second isotopes, said one of the first and second isotopes being different from the one of the first and second isotopes that enter the particle detector. In this way, an isotopic ratio between a radioisotope and a stable isotope of a chemical element of interest in a sample can be determined from a measurement of a quantity of ions of the stable isotope and a measurement of a quantity of ions of the radioisotope.

In a preferred embodiment, the step of measuring the second quantity is performed after the second mass analyzer. Essentially, both magnetic and electrostatic versions of the additional analyzer will be equally suitable as long as they provide different bending radii for the different charge-states.

Preferably, the magnetic analyzer comprises a dipole magnet and the electrostatic analyzer comprises an electrostatic deflector.

In a preferred embodiment, the step of separating positive ions having a predetermined charge state from positive ions having a charge state corresponding to a predetermined charge-state value from positive ions having a charge state different from the predetermined charge-state value comprises deflecting particle trajectories of the positive ions over a bending angle of 30 degrees or less. In the case that additional analyzer is in the form of a dipole magnet, the additional analyzer will have slight different bending radii for the different isotopes of interest, which asks for a careful design of the second mass analyzer and the subsequent Faraday cups. Since the required bending angle of the additional analyzer can be relatively small and at the same time eliminates the dominant contribution to the background, it provides an efficient and cost-effective manner to surpass limitations on background interference of existing instrumentation. Preferably, the bending angle is between 5 and 20 degrees. More preferably, the bending angle is approximately 12 degrees.

In a preferred embodiment, the method steps are configured to measure a quantity of radiocarbon in the sample, wherein the step of separating positive ions having a charge state corresponding to a predetermined charge-state value from positive ions having a charge state different from the predetermined charge-state value is configured to select charge state 1+. In this specific configuration adapted to the measurement of radiocarbon (i.e. ¹⁴C) using charge state 1+, the bending angle can be smaller than 30 degrees, or even as small as approximately 12 degrees, so that the method is eminently suitable for such measurement. Such bending angles are sufficiently large to effectively remove the otherwise interfering ions. The method therewith provides an efficient and cost-effective manner to surpass limitations on background interference of existing instrumentation.

The present invention is further elucidated on the basis of the following figures which show preferred embodiments thereof and are not intended to limit the scope of protection of the invention in any way, wherein:
- figure 1 shows a schematic layout of an accelerator mass spectrometry system known from prior art; and
- figure 2 shows a schematic layout of a preferred embodiment of the accelerator mass spectrometry system according to the invention.

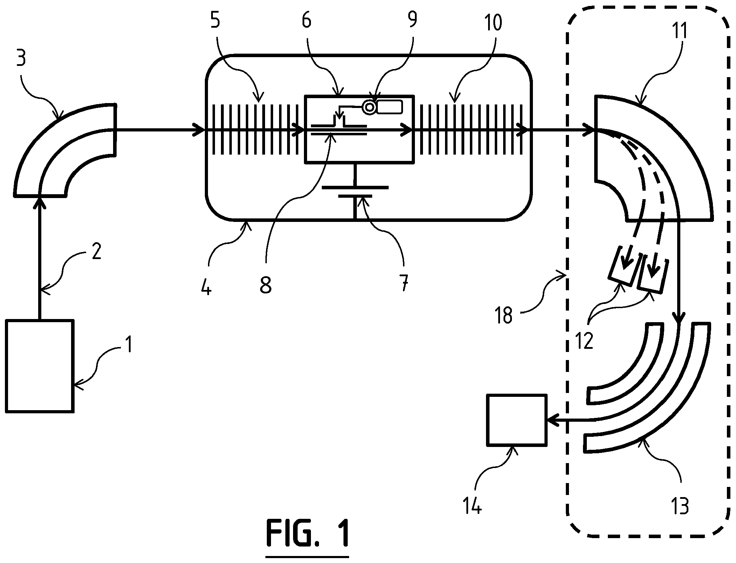

Referring to figure 1, a solid or gaseous sample under investigation is introduced into an ion source 1. In the ion source at least part of the sample material is ionized into the negative charge state. In an electrostatic field region, the negative ions are extracted from the ion source to form a negative ion beam 2. The isotopes of interest are then selected in a cyclic fashion by a first mass analyzer 3 in which each isotope is selected after the other for a specific duration for further transport into the tandem accelerator 4. In a first accelerating section 5 of the tandem accelerator 4, the ions are accelerated towards a high-voltage terminal 6 that is maintained at a positive potential by a high-voltage power supply 7. In the terminal, the ions are directed through a so called stripper 8 that consists of a tube into which a small amount of gas is admitted from a gas supply system 9. In the stripper 8 the gas pressure is relatively high and the incoming negative ions are charge-exchanged to a singly or multiply positive charge state by interaction with the gas atoms or molecules. The stripper 8 not only serves to charge-exchange the incoming ions into a positive charge state, but also serves to dissociate or break-up molecules that could otherwise mimic the isotopes of interest, thereby contributing to the background level of the instrument.

After the charge-exchange in the stripper, the positive ions are accelerated back towards ground potential in a second acceleration section 10, after which they leave the tandem accelerator towards a second analyzer section 18, comprising a second mass analyzer 11 and an electrostatic analyzer 13. The second mass analyzer 11 directs e.g. the stable isotope ions into individual Faraday cups 12, whereas e.g. the radioisotope ions are subsequently further analyzed in the electrostatic analyzer 13. The electrostatic analyzer 13 serves to exclusively transmit those ions with the correct energy-to-charge ratio, thereby blocking those interfering ions that have unintentionally passed the second mass analyzer. Finally, the ions enter a particle detector 14 that discriminates, within limits, between bona-fide radioisotopes of interest and interfering ions. However, its resolving power is limited and therefore some interfering ions may be incorrectly identified as bona-fide radioisotope particles.
Finally, the data acquisition of the accelerator mass spectrometry system collects the data from the Faraday cups 12 and the particle detector 14 and from this the isotopic ratio is determined.

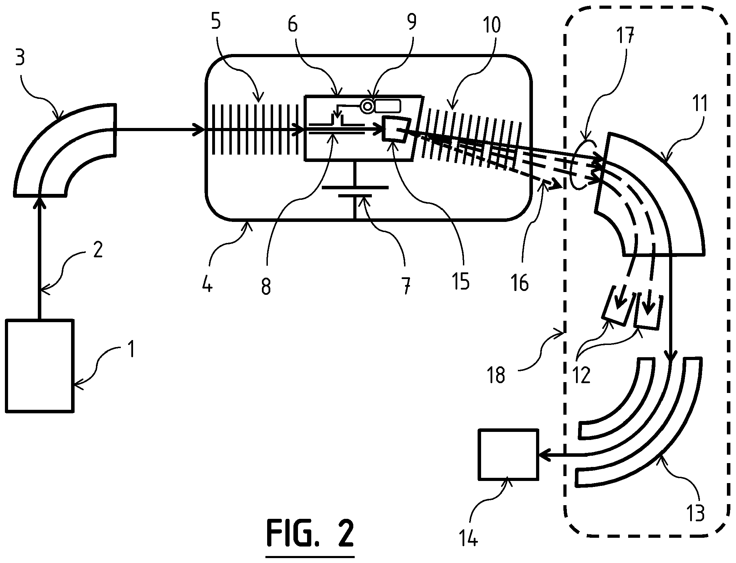

In contrast to the instrument of figure 1, the instrument of figure 2 has an additional analyzer 15 located in the high-voltage terminal 6 of the accelerator 4, after the stripper 8, but before the second acceleration section 10. Furthermore, it is noted that there are many variations possible on the details of the systems described above and the sequence of the analyzers/filters in the system. For instance, the position of the second mass analyzer 11 and the position of the electrostatic analyzer 13 may be interchanged in the accelerator mass spectrometry system according to a preferred embodiment of the invention as shown in figure 2.

The additional analyzer 15 serves as a charge-state selector, in which interfering ions 16 that have a different charge-state than that of an isotope of interest, such as a radioisotope, have a different bending radius and are consequently swept out of the path of the isotopes of interest 17.

In particular, the additional analyzer 15 enables improving accelerator mass spectrometry system performance in terms of background level in measurements of radiocarbon quantities. A known and cumbersome background source in the measurement of radiocarbon (i.e. ¹⁴C) quantities results from the injection of the interfering molecule of ¹³CH⁻ into the tandem accelerator 4, along with the wanted ¹⁴C⁻. In the stripping process, the ¹³CH⁻ is dissociated and charge-exchanged into a positive charge state. A background problem arises when the charge state of the ¹³C is one unit higher (for example 2+, instead of the 1+) than that of the ¹⁴C of interest and a subsequent unintended charge-exchange from 2+ to 1+ of the ¹³C ions takes place at a very specific location inside the second acceleration section 10. This may result in an energy of the ¹³C ions that is a little higher than the reference ¹⁴C ions so that the ¹³C interfering ions follow essentially the same path in the second mass analyzer 11 as the ¹⁴C of interest. Although the electrostatic analyzer 13 that follows is designed to block such interferences that have incorrect energy, its resolving power is insufficient to suppress the interfering ¹³C completely. It is known that by just one single scattering event on one of the electrodes of the electrostatic analyzer 13 a very small but noticeable fraction of the interfering ¹³C, in the order of 10⁻⁵, can reach the particle detector 14, adding to the background level. A comparable interference arises when the unintended charge-exchange from 2+ to 1+ of the ¹³C takes place at a different, but again a very specific location inside the second acceleration section 10, in which case it is the second mass analyzer 11 that has insufficient resolving power to suppress the interfering ¹³C completely.

The class of background described above is characterized in that it originates from particles that leave the stripper 8 having a charge state that is one unit higher than that of the radioisotope of interest in combination with a charge-exchange of the corresponding particle in the second acceleration section 10. It is generally accepted that this class of background is the main contributor to the overall background level of today's ¹⁴C analyzing accelerator mass spectrometry systems. The additional analyzer 15 directly behind the stripper 8 enables sweeping out interfering ¹³C ions that have a different charge-state than that of ¹⁴C from the path of the ¹⁴C ions due to the bending radius of the ¹³C ions being different from the bending radius of the ¹⁴C ions, because of their different charge state.

Because the relative difference between the two charge states, e.g. 1+ versus 2+, or 2+ versus 3+, *et cetera,* is large, the bending angle of additional analyzer 15 may be relatively small in comparison to other analyzers in the accelerator mass spectrometry system, while still providing the required background reduction. The reason for this is that the other analyzers need to resolve one isotope from the other, which is a relative small difference and therefore requires a larger bending angle compared to mere charge-state selection. The location of the additional analyzer 15 between the stripper 8 and second acceleration section 10 is optimal, since this is the only location where the interfering ions that need to be suppressed can be relatively easily discriminated from the isotope of interest. As a result, a compact additional analyzer 15 having a small bending angle located in between the stripper 8 and the second accelerating section 10 is capable of effectively reducing the background level of the accelerator mass spectrometry system, while keeping an increase in costs, complexity and footprint of the system small.

The additional analyzer 15 can be in the form of a magnetic analyzer or dipole magnet, or alternatively in the form of an electrostatic analyzer. Both magnetic and electrostatic versions of the additional analyzer 15 will be essentially equally suitable as long as they provide different bending radii for the different charge-states. The bending angle of the additional analyzer 15 should be sufficiently large to effectively remove the otherwise interfering ions 16. In practice and in the case of an accelerator mass spectrometry system that is specifically designed for ¹⁴C analysis using charge state 1+, it turns out that the bending angle can be smaller than 30 degrees, or even as small as approximately 12 degrees. In the case that additional analyzer 15 is in the form of a dipole magnet, the additional analyzer 15 will have slight different bending radii for the different isotopes of interest 17, which is also indicated in figure 2, and this asks for a careful design of the second mass analyzer 11 as well as the subsequent the Faraday cups 12. Since the required bending angle of the additional analyzer 15 can be relatively small and at the same time eliminates the dominant contribution to the background, it provides an efficient and cost-effective manner to surpass limitations on background interference of existing instrumentation.

The present invention is by no means limited to the above described preferred embodiments thereof. The rights claimed are determined by the appended claims within the scope of which many modifications are conceivable.

## Claims

1. Accelerator mass spectrometry system for measuring an isotopic ratio of a chemical element in a sample, comprising:
an ion source (1) generating a beam (2) of negative ions of the chemical element containing ions of a first isotope and ions of a second isotope, being different from the first isotope, of the chemical element;
a first analyzer section, comprising a first mass analyzer (3) configured to separate negative ions having a mass corresponding to a first predetermined value from negative ions having a mass not corresponding to the first predetermined value, such that only negative ions having a mass corresponding to the first predetermined value are transmitted;
a tandem accelerator (4) configured to receive the negative ions that have been transmitted by the first mass analyzer, the tandem accelerator comprising:
a first accelerating section (5) configured to accelerate the negative ions and to direct them through a charge stripping section (8) for converting the negative ions into positive ions, and
a second accelerating section (10) behind the charge stripping section configured to accelerate the positive ions;
a second analyzer section (18), arranged downstream of the tandem accelerator, comprising:
a second mass analyzer (11) configured to separate positive ions having a mass corresponding to a second predetermined value from positive ions having a mass not corresponding to the second predetermined value, such that only positive ions having a mass corresponding to the second predetermined value are transmitted, and
an electrostatic analyzer (13) configured to separate positive ions having an energy-to-charge ratio corresponding to a third predetermined value from positive ions having an energy-to-charge ratio not corresponding to the third predetermined value, such that only positive ions having an energy-to-charge ratio corresponding to the third predetermined value are transmitted;
a particle detector (14) configured to receive the positive ions that have been transmitted by the second analyzer section and configured to measure a quantity of ions; and
a controller system configured to control the first mass analyzer section and the second analyzer section such that the ions of the first and second isotopes traverse the tandem accelerator and ions of only one of the first and second isotopes enter the particle detector,
**characterized by**
an additional analyzer (15) located in between the charge stripping section and the second accelerating section, which is configured to receive positive ions that have exited the charge stripping section and to separate positive ions having a charge state corresponding to a predetermined charge-state value from positive ions having a charge state not corresponding to the predetermined charge-state value, so as to transmit ions with different charge states in mutually different directions such that only ions having a charge state corresponding to the predetermined charge-state value are transmitted towards the particle detector.

2. Accelerator mass spectrometry system in accordance with claim 1, further comprising a Faraday cup (12) configured to measure a quantity of ions of only one of the first and second isotopes, said one of the first and second isotopes being different from the one of the first and second isotopes that enter the particle detector.

3. Accelerator mass spectrometry system in accordance with claim 2, wherein the Faraday cup is arranged after the second mass analyzer.

4. Accelerator mass spectrometry system in accordance with claim 1, 2 or 3, wherein the additional analyzer comprises a magnetic analyzer or an electrostatic analyzer.

5. Accelerator mass spectrometry system in accordance with claim 4, wherein the magnetic analyzer comprises a dipole magnet and the electrostatic analyzer comprises an electrostatic deflector.

6. Accelerator mass spectrometry system in accordance with claim 5, wherein the dipole magnet and the electrostatic deflector have a bending angle of 30 degrees or less.

7. Accelerator mass spectrometry system in accordance with claim 6, wherein the bending angle is between 5 and 20 degrees.

8. Accelerator mass spectrometry system in accordance with claim 7, wherein the bending angle is approximately 12 degrees.

9. Accelerator mass spectrometry system in accordance with any one of claims 1-8, wherein the accelerator mass spectrometry system is configured for a measurement of a quantity of radiocarbon in the sample, wherein the additional analyzer is configured to select charge state 1+.

10. Method for measuring an isotopic ratio of a chemical element in a sample, comprising:
generating a beam of negative ions of the chemical element containing ions of a first isotope and ions of a second isotope, being different from the first isotope, of the chemical element;
subjecting the beam to a first analyzer section, comprising a first mass analyzer to separate negative ions having a mass corresponding to a first predetermined value from negative ions having a mass not corresponding to the first predetermined value, such that only negative ions having a mass corresponding to the first predetermined value are transmitted;
subjecting the negative ions that have been transmitted by the first mass analyzer to a tandem accelerator accelerating the negative ions by a first accelerating section, directing them through a charge stripping section for converting the negative ions into positive ions, and accelerating the positive ions by a second accelerating section;
downstream of the tandem accelerator, subjecting the positive ions to a second analyzer section, comprising a second mass analyzer to separate positive ions having a mass corresponding to a second predetermined value from positive ions having a mass not corresponding to the second predetermined value, such that only positive ions having a mass corresponding to the second predetermined value are transmitted, and an electrostatic analyzer to separate positive ions having an energy-to-charge ratio corresponding to a third predetermined value from positive ions having an energy-to-charge ratio not corresponding to the third predetermined value, such that only positive ions having an energy-to-charge ratio corresponding to the third predetermined value are transmitted;
directing the positive ions that have been transmitted by the second analyzer section towards a particle detector and detecting the positive ions to measure a first quantity of ions;
controlling the first mass analyzer section and the second analyzer section such that the ions of the first and second isotopes traverse the tandem accelerator and ions of only one of the first and second isotopes enter the particle detector,
**characterized by**
subjecting the positive ions that have exited the charge stripping section to an additional analyzer, located in between the charge stripping section and the second accelerating section, to separate positive ions having a charge state corresponding to a predetermined charge-state value from positive ions having a charge state not corresponding to the predetermined charge-state value, so as to transmit ions with different charge states in mutually different directions such that only ions having a charge state corresponding to the predetermined charge-state value are transmitted towards the particle detector.

11. Method in accordance with claim 10, further comprising a step of measuring a second quantity of ions of only one of the first and second isotopes, said one of the first and second isotopes being different from the one of the first and second isotopes that enter the particle detector.

12. Method in accordance with claim 11, wherein the step of measuring the second quantity is performed after the second mass analyzer.

13. Method in accordance with claim 10, 11 or 12, wherein the step of separating positive ions having a charge state corresponding to a predetermined charge-state value from positive ions having a charge state different from the predetermined charge-state value comprises deflecting particle trajectories of the positive ions over a bending angle of 30 degrees or less.

14. Method in accordance with claim 13, wherein the bending angle is between 5 and 20 degrees.

15. Method in accordance with claim 14, wherein the bending angle is approximately 12 degrees.

16. Method in accordance with any one of claims 10-15, wherein the method steps are configured to measure a quantity of radiocarbon in the sample, wherein the step of separating positive ions having a charge state corresponding to a predetermined charge-state value from positive ions having a charge state different from the predetermined charge-state value is configured to select charge state 1+.

## Patentansprüche

1. Beschleunigermassenspektrometriesystem zum Messen eines Isotopenverhältnisses eines chemischen Elements in einer Probe, das aufweist:
eine Ionenquelle (1), die einen Strahl (2) negativer Ionen des chemischen Elements erzeugt, der Ionen eines ersten Isotops und Ionen eines zweiten Isotops, das verschieden von dem ersten Isotop ist, des chemischen Elements enthält;
einen ersten Analysatorabschnitt, der einen ersten Massenanalysator (3) aufweist, der konfiguriert ist, um negative Ionen mit einer Masse, die einem ersten vorbestimmten Wert entspricht, von negativen Ionen, die eine Masse haben, die nicht dem ersten vorbestimmten Wert entspricht, zu trennen, so dass nur negative Ionen mit einer Masse, die dem ersten vorbestimmten Wert entspricht, transmittiert werden;
einen Tandembeschleuniger (4), der konfiguriert ist, um die negativen Ionen, die durch den ersten Massenanalysator transmittiert wurden, zu empfangen, wobei der Tandembeschleuniger aufweist:
einen ersten Beschleunigungsabschnitt (5), der konfiguriert ist, um die negativen Ionen zu beschleunigen und sie durch einen Ladungsabstreifabschnitt (8) zum Umwandeln negativer Ionen in positive Ionen zu lenken, und
einen zweiten Beschleunigungsabschnitt (10) hinter dem Ladungsabstreifabschnitt, der konfiguriert ist, um die positiven Ionen zu beschleunigen;
einen zweiten Analysatorabschnitt (18), der laufabwärtig von dem Tandembeschleuniger angeordnet ist, der aufweist:
einen zweiten Massenanalysator (11), der konfiguriert ist, um positive Ionen mit einer Masse, die einem zweiten vorbestimmten Wert entspricht, von positiven Ionen mit einer Masse, die nicht dem zweiten vorbestimmten Wert entspricht, zu trennen, so dass nur positive Ionen mit einer Masse, die dem zweiten vorbestimmten Wert entspricht, transmittiert werden, und
einen elektrostatischen Analysator (13), der konfiguriert ist, um positive Ionen mit einem Energie-Ladungsverhältnis, das einem dritten vorbestimmten Wert entspricht, von positiven Ionen mit einem Energie-Ladungsverhältnis, das nicht dem dritten vorbestimmten Wert entspricht, zu trennen, so dass nur positive Ionen mit einem Energie-Ladungsverhältnis, das dem dritten vorbestimmten Wert entspricht, transmittiert werden;
einen Teilchendetektor (14), der konfiguriert ist, um die positiven Ionen, die durch den zweiten Analysatorabschnitt transmittiert wurden, zu empfangen und eine Menge von Ionen zu messen; und
ein Steuerungssystem, das konfiguriert ist, um den ersten Massenanalysatorabschnitt und den zweiten Analysatorabschnitt derart zu steuern, dass Ionen der ersten und zweiten Isotope den Tandembeschleuniger durchqueren und Ionen nur eines der ersten und zweiten Isotope in den Teilchendetektor eintreten,
**gekennzeichnet durch**
einen zusätzlichen Analysator (15), der zwischen dem Ladungsabstreifabschnitt und dem zweiten Beschleunigungsabschnitt angeordnet ist, der konfiguriert ist, um positive Ionen, die den Ladungsabstreifabschnitt verlassen haben, zu empfangen und um positive Ionen mit einem Ladungszustand, der einem vorbestimmten Ladungszustand entspricht, von positiven Ionen mit einem Ladungszustand, der nicht dem vorbestimmten Ladungszustand entspricht, zu trennen, um Ionen mit unterschiedlichen Ladungszuständen in wechselseitig unterschiedliche Richtungen zu transmittieren, so dass nur Ionen mit einem Ladungszustand, der dem vorbestimmten Ladungszustand entspricht, in Richtung des Teilchendetektors transmittiert werden.

2. Beschleunigermassenspektrometriesystem nach Anspruch 1, das ferner einen Faradayschen Käfig (12) aufweist, der konfiguriert ist, um eine Menge von Ionen nur eines der ersten und zweiten Isotope zu messen, wobei das eine der ersten und zweiten Isotope verschieden von dem einen der ersten und zweiten Isotope ist, das in den Teilchendetektor eintritt.

3. Beschleunigermassenspektrometriesystem nach Anspruch 2, wobei der Faradaysche Käfig nach dem zweiten Massenanalysator angeordnet ist.

4. Beschleunigermassenspektrometriesystem nach Anspruch 1, 2 oder 3, wobei der zusätzliche Analysator einen magnetischen Analysator oder einen elektrostatischen Analysator aufweist.

5. Beschleunigermassenspektrometriesystem nach Anspruch 4, wobei der magnetische Analysator einen Dipolmagneten aufweist und der elektrostatische Analysator einen elektrostatischen Deflektor aufweist.

6. Beschleunigermassenspektrometriesystem nach Anspruch 5, wobei der Dipolmagnet und der elektrostatische Deflektor einen Biegewinkel von 30 Grad oder weniger haben.

7. Beschleunigermassenspektrometriesystem nach Anspruch 6, wobei der Biegewinkel zwischen 5 und 20 Grad ist.

8. Beschleunigermassenspektrometriesystem nach Anspruch 7, wobei der Biegewinkel ungefähr 12 Grad ist.

9. Beschleunigermassenspektrometriesystem nach einem der Ansprüche 1-8, wobei das Beschleunigermassenspektrometriesystem für eine Messung einer Menge Radiokarbon in der Probe konfiguriert ist, wobei der zusätzliche Analysator konfiguriert ist, um den Ladungszustand 1+ auszuwählen.

10. Verfahren zum Messen eines Isotopenverhältnisses eines chemischen Elements in einer Probe, das aufweist:
Erzeugen eines Strahls negativer Ionen des chemischen Elements, der Ionen eines ersten Isotops und Ionen eines zweiten Isotops, das verschieden von dem ersten Isotop ist, des chemischen Elements enthält;
Unterziehen des Strahls einem ersten Analysatorabschnitt, der einen ersten Massenanalysator aufweist, um negative Ionen mit einer Masse, die einem ersten vorbestimmten Wert entspricht, von negativen Ionen, die eine Masse haben, die nicht dem ersten vorbestimmten Wert entspricht, zu trennen, so dass nur negative Ionen mit einer Masse, die dem ersten vorbestimmten Wert entspricht, transmittiert werden;
Unterziehen der negativen Ionen, die durch den ersten Massenanalysator transmittiert wurden, einem Tandembeschleuniger, der die negativen Ionen durch einen ersten Beschleunigungsabschnitt beschleunigt, sie durch einen Ladungsabstreifabschnitt zum Umwandeln negativer Ionen in positive Ionen lenkt, und die positiven Ionen durch einen zweiten Beschleunigungsabschnitt beschleunigt;
laufabwärtig von dem Tandembeschleuniger Unterziehen der positiven Ionen einem zweiten Analysatorabschnitt, der aufweist: einen zweiten Massenanalysator, um positive Ionen mit einer Masse, die einem zweiten vorbestimmten Wert entspricht, von positiven Ionen mit einer Masse, die nicht dem zweiten vorbestimmten Wert entspricht, zu trennen, so dass nur positive Ionen mit einer Masse, die dem zweiten vorbestimmten Wert entspricht, transmittiert werden, und einen elektrostatischen Analysator, um positive Ionen mit einem Energie-Ladungsverhältnis, das einem dritten vorbestimmten Wert entspricht, von positiven Ionen mit einem Energie-Ladungsverhältnis, das nicht dem dritten vorbestimmten Wert entspricht, zu trennen, so dass nur positive Ionen mit einem Energie-Ladungsverhältnis, das dem dritten vorbestimmten Wert entspricht, transmittiert werden;
Lenken der positiven Ionen, die durch den zweiten Analysatorabschnitt transmittiert wurden, in Richtung eines Teilchendetektors und Detektieren der positiven Ionen, um eine erste Menge von Ionen zu messen; und
Steuern des ersten Massenanalysatorabschnitts und des zweiten Analysatorabschnitts, so dass die Ionen der ersten und zweiten Isotope den Tandembeschleuniger durchqueren und Ionen nur eines der ersten und zweiten Isotope in den Teilchendetektor eintreten,
**gekennzeichnet durch**
Unterziehen der positiven Ionen, die den Ladungsabstreifabschnitt verlassen haben, einem zusätzlichen Analysator, der zwischen dem Ladungsabstreifabschnitt und dem zweiten Beschleunigungsabschnitt angeordnet ist, um positive Ionen mit einem Ladungszustand, der einem vorbestimmten Ladungszustand entspricht, von positiven Ionen mit einem Ladungszustand, der nicht dem vorbestimmten Ladungszustand entspricht, zu trennen, um Ionen mit unterschiedlichen Ladungszuständen in wechselseitig unterschiedliche Richtungen zu transmittieren, so dass nur Ionen mit einem Ladungszustand, der dem vorbestimmten Ladungszustand entspricht, in Richtung des Teilchendetektors transmittiert werden.

11. Verfahren nach Anspruch 10, das ferner den Schritt des Messens einer zweiten Menge von Ionen nur eines der ersten und zweiten Isotope aufweist, wobei das eine der ersten und zweiten Isotope verschieden von dem einen der ersten und zweiten Isotope ist, das in den Teilchendetektor eintritt.

12. Verfahren nach Anspruch 11, wobei der Schritt des Messens der zweiten Menge nach dem zweiten Massenanalysator durchgeführt wird.

13. Verfahren nach Anspruch 10, 11 oder 12, wobei der Schritt zum Trennen positiver Ionen mit einem Ladungszustand, der einem vorbestimmten Ladungszustandswert entspricht, von Ionen mit einem Ladungszustand, der verschieden zu dem vorbestimmten Ladungszustandswert ist, das Umlenken von Teilchentrajektorien der positiven Ionen über einen Biegewinkel von 30 Grad oder weniger aufweist.

14. Verfahren nach Anspruch 13, wobei der Biegewinkel zwischen 5 und 20 Grad ist.

15. Verfahren nach Anspruch 14, wobei der Biegewinkel ungefähr 12 Grad ist.

16. Verfahren nach einem der Ansprüche 10 - 15, wobei die Verfahrensschritte konfiguriert sind, um eine Menge von Radiokarbon in der Probe zu messen, wobei der Schritt zum Trennen positiver Ionen mit einem Ladungszustand, der einem vorbestimmten Ladungszustandswert entspricht, von positiven Ionen mit einem Ladungszustand, der zu dem vorbestimmten Ladungszustandswert verschieden ist, konfiguriert ist, um den Ladungszustand 1+ auszuwählen.

## Revendications

1. Dispositif de spectrométrie de masse à accélérateur destiné à mesurer un rapport isotopique d'un élément chimique dans un échantillon, comprenant :
une source d'ions (1) produisant un faisceau (2) d'ions négatifs de l'élément chimique contenant des ions d'un premier isotope et des ions d'un second isotope, qui est différent du premier isotope, de l'élément chimique ;
une première section d'analyseur, comprenant un premier analyseur de masse (3) configuré de manière à séparer des ions négatifs présentant une masse correspondant à une première valeur prédéterminée par rapport à des ions négatifs présentant une masse ne correspondant pas à la première valeur prédéterminée, de telle sorte que seuls les ions négatifs présentant une masse correspondant à la première valeur prédéterminée sont transmis ;
un accélérateur tandem (4) configuré de manière à recevoir les ions négatifs qui ont été transmis par le premier analyseur de masse, l'accélérateur tandem comprenant :
une première section d'accélération (5) configurée de manière à accélérer les ions négatifs et à les diriger à travers une section de séparation de charge (8) afin de transformer les ions négatifs en ions positifs, et
une seconde section d'accélération (10) derrière la section de séparation de charge configurée de manière à accélérer les ions positifs ;
une seconde section d'analyseur (18), agencée en aval de l'accélérateur tandem, comprenant :
un second analyseur de masse (11) configuré de manière à séparer les ions positifs présentant une masse correspondant à une deuxième valeur prédéterminée par rapport à des ions positifs présentant une masse ne correspondant pas à la deuxième valeur prédéterminée, de telle sorte que seuls les ions positifs présentant une masse correspondant à la deuxième valeur prédéterminée sont transmis, et
un analyseur électrostatique (13) configuré de manière à séparer les ions positifs présentant un rapport d'énergie-sur-charge correspondant à une troisième valeur prédéterminée par rapport à des ions positifs présentant un rapport d'énergie-sur-charge ne correspondant pas à la troisième valeur prédéterminée, de telle sorte que seuls les ions positifs présentant un rapport d'énergie-surcharge correspondant à la troisième valeur prédéterminée sont transmis ;
un détecteur de particules (14) configuré de manière à recevoir les ions positifs qui ont été transmis par la seconde section d'analyseur et configuré de manière à mesurer une quantité d'ions ; et
un dispositif formant unité de commande configuré de manière à commander la première section d'analyseur de masse et la seconde section d'analyseur de telle sorte que les ions des premier et second isotopes traversent l'accélérateur tandem et les ions de seul l'un des premier et second isotopes entrent dans le détecteur de particules,
**caractérisé par**
un analyseur supplémentaire (15) situé entre la section de séparation de charge et la seconde section d'accélération, qui est configuré de manière à recevoir des ions positifs qui sont sortis de la section de séparation de charge et à séparer les ions positifs présentant un état de charge correspondant à une valeur d'état de charge prédéterminée par rapport à des ions positifs présentant un état de charge ne correspondant pas à la valeur d'état de charge prédéterminée, afin de transmettre des ions présentant différents états de charge dans des directions mutuellement différentes de telle sorte que seuls des ions présentant un état de charge correspondant à la valeur d'état de charge prédéterminée sont transmis vers le détecteur de particules.

2. Dispositif de spectrométrie de masse à accélérateur selon la revendication 1, comprenant, en outre, une cage de Faraday (12) configurée de manière à mesurer une quantité d'ions d'un seul des premier et second isotopes, ledit un des premier et second isotopes étant différents de l'un des premier et second isotopes qui entre dans le détecteur de particules.

3. Dispositif de spectrométrie de masse à accélérateur selon la revendication 2, dans lequel la cage de Faraday est agencée après le second analyseur de masse.

4. Dispositif de spectrométrie de masse à accélérateur selon la revendication 1, 2 ou 3, dans lequel l'analyseur supplémentaire comprend un analyseur magnétique ou un analyseur électrostatique.

5. Dispositif de spectrométrie de masse à accélérateur selon la revendication 4, dans lequel l'analyseur magnétique comprend un aimant dipolaire et l'analyseur électrostatique comprend un déflecteur électrostatique.

6. Dispositif de spectrométrie de masse à accélérateur selon la revendication 5, dans lequel l'aimant dipolaire et le déflecteur électrostatique présentent un angle de courbure inférieur ou égal à 30 degrés.

7. Dispositif de spectrométrie de masse à accélérateur selon la revendication 6, dans lequel l'angle de courbure est compris entre 5 et 20 degrés.

8. Dispositif de spectrométrie de masse à accélérateur selon la revendication 7, dans lequel l'angle de courbure est approximativement égal à 12 degrés.

9. Dispositif de spectrométrie de masse à accélérateur selon l'une quelconque des revendications 1 à 8, dans lequel le dispositif de spectrométrie de masse à accélérateur est configuré afin d'assurer une mesure d'une quantité de radio-isotope de carbone dans l'échantillon, dans lequel l'analyseur supplémentaire est configuré de manière à sélectionner l'état de charge 1+.

10. Procédé de mesure d'un rapport isotopique d'un élément chimique dans un échantillon, comprenant :
la production d'un faisceau d'ions négatifs de l'élément chimique contenant des ions d'un premier isotope et des ions d'un second isotope, qui est différent du premier isotope, de l'élément chimique ;
le traitement du faisceau dans une première section d'analyseur, comprenant un premier analyseur de masse afin de séparer des ions négatifs présentant une masse correspondant à une première valeur prédéterminée par rapport à des ions négatifs présentant une masse ne correspondant pas à la première valeur prédéterminée, de telle sorte que seuls les ions négatifs présentant une masse correspondant à la première valeur prédéterminée sont transmis ;
le traitement des ions négatifs qui ont été transmis par le premier analyseur de masse dans un accélérateur tandem accélérant les ions négatifs par une première section d'accélération, leur guidage à travers une section de séparation de charge afin de transformer les ions négatifs en ions positifs, et l'accélération des ions positifs par une seconde section d'accélération ;
en aval de l'accélérateur tandem, le traitement des ions positifs dans une seconde section d'analyseur, comprenant un second analyseur de masse destiné à séparer les ions positifs présentant une masse correspondant à une deuxième valeur prédéterminée par rapport à des ions positifs présentant une masse ne correspondant pas à la deuxième valeur prédéterminée, de telle sorte que seuls les ions positifs présentant une masse correspondant à la deuxième valeur prédéterminée sont transmis, et un analyseur électrostatique destiné à séparer les ions positifs présentant un rapport d'énergie-sur-charge correspondant à une troisième valeur prédéterminée par rapport à des ions positifs présentant un rapport d'énergie-sur-charge ne correspondant pas à la troisième valeur prédéterminée, de telle sorte que seuls les ions positifs présentant un rapport d'énergie-sur-charge correspondant à la troisième valeur prédéterminée sont transmis ;
le guidage des ions positifs qui ont été transmis par la seconde section d'analyseur vers un détecteur de particules et la détection des ions positifs afin de mesurer une première quantité d'ions ;
la commande de la première section d'analyseur de masse et de la seconde section d'analyseur de telle sorte que les ions des premier et second isotopes traversent l'accélérateur tandem et les ions de seul l'un des premier et second isotopes entrent dans le détecteur de particules,
**caractérisé par**
le traitement des ions positifs qui sont sortis de la section de séparation de charge dans un analyseur supplémentaire, situé entre la section de séparation de charge et la seconde section d'accélération, afin de séparer les ions positifs présentant un état de charge correspondant à une valeur d'état de charge prédéterminée par rapport à des ions positifs présentant un état de charge ne correspondant pas à la valeur d'état de charge prédéterminée, de manière à transmettre des ions avec différents états de charge dans des directions mutuellement différentes de telle sorte que seuls des ions présentant un état de charge correspondant à la valeur d'état de charge prédéterminée sont transmis vers le détecteur de particules.

11. Procédé selon la revendication 10, comprenant, en outre, une étape de mesure d'une seconde quantité d'ions de seul l'un des premier et second isotopes, ledit un des premier et second isotopes étant différent de celui des premier et second isotopes qui entre dans le détecteur de particules.

12. Procédé selon la revendication 11, dans lequel l'étape de mesure de la seconde quantité est exécutée après le second analyseur de masse.

13. Procédé selon la revendication 10, 11 ou 12, dans lequel l'étape de séparation des ions positifs présentant un état de charge correspondant à une valeur d'état de charge prédéterminée par rapport à des ions positifs présentant un état de charge différent de la valeur d'état de charge prédéterminée comprend la déviation de trajectoires particulaires des ions positifs sur un angle de courbure inférieur ou égal à 30 degrés.

14. Procédé selon la revendication 13, dans lequel l'angle de courbure est compris entre 5 et 20 degrés.

15. Procédé selon la revendication 14, dans lequel l'angle de courbure est approximativement égal à 12 degrés.

16. Procédé selon l'une quelconque des revendications 10 à 15, dans lequel les étapes de procédé sont configurées de manière à mesurer une quantité de radio-isotope de carbone dans l'échantillon, dans lequel l'étape de séparation des ions positifs présentant un état de charge correspondant à une valeur d'état de charge prédéterminée par rapport à des ions positifs présentant un état de charge différent de la valeur d'état de charge prédéterminée est configurée de manière à sélectionner l'état de charge 1+.
